# EUROPÄISCHE PATENTANMELDUNG

(11) **EP 1 607 308 A2**
(43) Veröffentlichungstag der Anmeldung: **21.12.2005**
(21) Anmeldenummer: 05103863.6
(22) Anmeldetag: 10.05.2005
(51) Int. Cl.: B62D 6/00, B62D 5/065

(54) **Servounterstütztes Lenksystem eines Kraftfahrzeugs**

(30) Priorität: 15.06.2004 DE 102004028826
(71) Anmelder: ZF Lenksysteme GmbH, 73527 Schwäbisch Gmünd (DE)
(72) Erfinder: Reinelt, Wolfgang, 70374 Stuttgart (DE); Klier, Willy, 71404 Korb (DE); Schuster, Wolfgang, 73453 Abtsgmünd (DE); Grossheim, Reinhard, 73560 Böbingen (DE)

(57) **Zusammenfassung**

Die Erfindung betrifft ein servounterstütztes Lenksystem eines Kraftfahrzeugs, mit einer Lenkhandhabe zur Vorgabe eines Lenkradwinkels als Maß für einen gewünschten Lenkwinkel für wenigstens ein lenkbares Rad des Kraftfahrzeugs, einem Lenkgetriebe mit einem Ritzel, welches einen von dem Lenkradwinkel abhängigen Ritzelwinkel in den Lenkwinkel des wenigstens einen lenkbare Rades des Kraftfahrzeugs umsetzt, Überlagerungsmitteln zur Erzeugung eines Zusatzwinkels und zur Erzeugung des Ritzelwinkels aus einer Überlagerung des Lenkradwinkels mit dem Zusatzwinkel und einem Servoantrieb mit einer elektronisch steuerbaren Hydraulikpumpe zur Realisierung einer variablen Momentenunterstützung, wobei eine Durchflussmenge für die elektronisch steuerbare Hydraulikpumpe in Abhängigkeit der Drehgeschwindigkeit des Ritzelwinkels (δ̇_{*G*}) ermittelt und durch ein Steuersignal (i_{d}) eines Steuergeräts des Lenksystems gesteuert wird.

Bezugszeichen

- 1: Lenksystem
- 2: Lenkrad
- 3: Gelenkwelle
- 4: Lenkgetriebe
- 5a,b: lenkbare Räder
- 6: Zahnstange
- 7: Ritzel
- 8: Überlagerungsmittel
- 9: Stellantrieb/Elektromotor
- 10: Überlagerungsgetriebe
- 11: Servoantrieb
- 12: elektronisch steuerbare Hydraulikpumpe
- 13: Steuergerät
- 14: hydraulische Nutzfunktion
- 15a,b: Teilfunktionen
- 16: Kennfeld

- δ_{S}: Lenkradwinkel
- δ_{M}: Motorwinkel
- δ_{Md}: Steuersignal / gewünschter Motorwinkel
- δ_{G}: überlagerte Bewegung/Ritzelwinkel
- δ_{Fm}: Lenkwinkel
- δ̇_{*G*}: Drehgeschwindigkeit des Ritzelwinkels
- i_{d}: Steuersignal für die Hydraulikpumpe
- i_{dK}: Steuersignal gemäß Kennfeld
- i_{dman}: Steuersignal konstanter Strom
- F_{Stat}: Funktionsstatus

## Beschreibung

Die Erfindung betrifft ein servounterstütztes Lenksystem eines Kraftfahrzeugs. Das Lenksystem umfasst eine Lenkhandhabe zur Vorgabe eines Lenkradwinkels als Maß für einen gewünschten Lenkwinkel für mindestens ein lenkbares Rad des Kraftfahrzeugs. Außerdem umfasst das Lenksystem einen Servoantrieb zur Realisierung einer variablen Momentenunterstützung und Überlagerungsmittel, welche einen Zusatzwinkel erzeugen und den von der Lenkhandhabe vorgegebenen Lenkradwinkel, insbesondere zur Realisierung einer variablen Lenkübersetzung mit dem Zusatzwinkel überlagern.

Die Erfindung betrifft auch ein Verfahren zum Betrieb eines derartigen servounterstützten Lenksystems.

Die Erfindung betrifft ebenso ein Computerprogramm und ein Computerprogrammprodukt mit Programmcodemitteln, um das Verfahren zum Betrieb des servounterstützten Lenksystems auf einem Rechner, insbesondere auf einem Mikroprozessor, eines Steuergeräts des servounterstützten Lenksystems durchzuführen und ein derartiges Steuergerät.

Aus der DE 100 13 711 A1 ist ein Lenksystem bekannt, das unter anderem einen Servoantrieb zur Momentenunterstützung (Servolenkung) aufweist. Der Grad der Momentenunterstützung ist bei dem beschriebenen Lenksystem abhängig von der Fahrfahrzeuggeschwindigkeit. Während bei langsamer Fahrfahrzeuggeschwindigkeit die Momentenunterstützung größer ist (z. B. um beim Rangieren des Fahrzeugs das Lenkrad ohne großen Kraftaufwand betätigen zu können), wird die Momentenunterstützung bei höheren Geschwindigkeiten (z. B. um die Fahrstabilität bei einer Autobahnfahrt zu erhöhen) gesenkt. Der Servoantrieb kann elektrisch oder hydraulisch arbeiten. Bei dem erfindungsgemäßen Lenksystem kann die Momentenunterstützung hydraulisch variiert werden.

Das in der DE 100 13 711 A1 beschriebene Lenksystem weist außer dem Servoantrieb auch Überlagerungsmittel auf, welche einen Zusatzwinkel erzeugen und den von der Lenkhandhabe vorgegebenen Lenkradwinkel mit diesem Zusatzwinkel überlagern. Ein Lenksystem mit Überlagerungsmitteln ist außerdem aus der DE 197 51 125 A1 bekannt. Dort wird die Bewegung (Zusatzwinkel bzw. Motorwinkel) eines Stellantriebs, d. h. eines Elektromotors mittels eines Überlagerungsgetriebes (beispielsweise ein Planetengetriebe) mit dem Lenkradwinkel überlagert. Mit Hilfe der Überlagerungsmittel ist es möglich, einen von der Lenkhandhabe vorgegebenen Lenkradwinkel zur Erhöhung der Fahrstabilität bzw. des Komforts mit einem Zusatzwinkel zu überlagern, so dass sich fahrdynamikabhängig bzw. komfortabhängig ein variables Übersetzungsverhältnis zwischen Lenkradwinkel und mittlerem Lenkwinkel der lenkbaren Räder des Kraftfahrzeugs einstellt. Dadurch ist es sicherheitstechnisch z. B. möglich, ein Kraftfahrzeug, welches auszubrechen droht, durch eine entsprechende Korrektur des Lenkwinkels wieder in eine stabile Fahrsituation zurückzuführen. Die Überlagerungsmittel können andere Fahrdynamiksysteme (z. B. ein elektronisches Stabilitätsprogramm (ESP) oder ein Antiblockiersystem (ABS)) unterstützen. Komforttechnisch ist es auch möglich, einem Lenkradwinkel beispielsweise einen geschwindigkeitsabhängigen Zusatzwinkel zu überlagern. Dadurch kann bei niedrigen Fahrzeuggeschwindigkeiten ein relativ kleines Übersetzungsverhältnis eingestellt werden, d. h. eine relativ kleine Drehung der Lenkhandhabe führt zu einem relativ großen Lenkwinkel der Räder. Bei hohen Fahrzeuggeschwindigkeiten kann dagegen ein relativ großes Übersetzungsverhältnis eingestellt werden, damit sich die Fahrstabilität des Kraftfahrzeugs erhöht. Auch das erfindungsgemäße Lenksystem weist Überlagerungsmittel auf.

Um ein Überlagerungslenksystem optimal nutzen zu können, wird eine höhere hydraulische Durchflussmenge beim Servoantrieb als bei konventionellen servounterstützten Lenksystemen benötigt, da Überlagerungslenksysteme im Vergleich zu konventionellen servounterstützten Lenksystemen eine deutlich höhere Ausgangsleistung an der Zahnstange aufweisen. Dabei können erhöhte thermische Belastungen und ein erhöhter Kraftstoffverbrauch auftreten.

Des weiteren können bei einer Überlagerung eines Zusatzwinkels durch die Überlagerungsmittel an der Lenkhandhabe unerwünschte Momente auftreten.

Der vorliegenden Erfindung liegt daher die Aufgabe zugrunde, ein Lenksystem, ein Verfahren zum Betrieb eines Lenksystems, ein Computerprogramm, ein Computerprogrammprodukt und ein Steuergerät der eingangs erwähnten Art zu schaffen, welche die Nachteile des Standes der Technik vermeiden, insbesondere thermische Belastungen minimieren und einen erhöhten Kraftstoffverbrauch verhindern, sowie eine geeignete Stelldynamik und eine momentenverträgliche Winkelüberlagerung gewährleisten.

Erfindungsgemäß wird diese Aufgabe durch Anspruch 1 gelöst. Die Aufgabe wird hinsichtlich des Verfahrens, des Computerprogramms, des Computerprogrammprodukts und des Steuergeräts durch die Ansprüche 7, 9, 10 und 11 gelöst.

Um thermische Belastungen zu minimieren und einen erhöhten Kraftstoffverbrauch zu verhindern, arbeitet der Servoantrieb des erfindungsgemäßen Lenksystems mittels einer elektronisch steuerbaren Hydraulikpumpe, welche beispielsweise aus der DE 102 05 859 A1 bekannt ist. Durch eine derartige Hydraulikpumpe kann die Energiebilanz innerhalb des Lenksystems gegenüber einer Hydraulikpumpe mit konstant hohem Durchfluss deutlich verbessert werden, da die Durchfluss- bzw. die Fördermenge der Hydraulikpumpe steuerbar ist. Hierzu betreibt eine hydraulische Nutzfunktion des Lenksystems den Durchfluss der Hydraulikpumpe in Abhängigkeit einer geeigneten Fahrzeuggröße, nämlich der Drehgeschwindigkeit des Ritzelwinkels (entspricht der ersten Ableitung des Ritzelwinkels nach der Zeit), welcher sich aus der Überlagerung des Lenkradwinkels mit dem Zusatzwinkel ergibt. Dadurch wird eine geeignete Stelldynamik und eine momentenverträgliche Winkelüberlagerung erreicht. Die Drehgeschwindigkeit des Ritzelwinkels stellt eine Kennzahl für die Aktivität des Lenksystems dar und enthält sowohl die Wirkungen der Lenkhandhabe als auch die des überlagerten Zusatzwinkels der Überlagerungsmittel. Die Erfinder haben dabei festgestellt, dass die Wahl des Zusatzwinkels anstelle des Ritzelwinkels weniger vorteilhaft ist, da dieser zeitweise auch negativ sein kann (d. h. entgegen der aktuellen Drehrichtung) und damit in diesem Fall eine unnötige Erhöhung der Durchflussmenge erfolgen würde.

Das Lenksystem weist zur Ansteuerung des Servoantriebs und der Überlagerungsmittel ein elektronisches Steuergerät auf, auf dem das erfindungsgemäße Verfahren zum Betrieb des Lenksystems abläuft. Das Steuergerät erhält als Eingangsgrößen den Lenkradwinkel, den Ritzelwinkel bzw. dessen Drehgeschwindigkeit, die Fahrzeuggeschwindigkeit oder dergleichen von Sensoren und/oder anderen Fahrzeugsystemen oder berechnet diese Größen aufgrund anderer Größen des Lenksystems bzw. des Kraftfahrzeugs. Aufgrund dieser Eingangsgrößen werden dann entsprechende elektrische Ansteuersignale zur Ansteuerung des Servoantriebs und der Überlagerungsmittel ermittelt.

Eine Ansteuerung der Hydraulikpumpe durch das erfindungsgemäße Verfahren zum Betrieb des Lenksystems in Abhängigkeit von der Fahrzeuggeschwindigkeit ist vorteilhaft, da die äußeren Kräfte, die auf das Lenksystem wirken, direkt von der Fahrzeuggeschwindigkeit abhängen. Während bei langsamer Fahrfahrzeuggeschwindigkeit die Momentenunterstützung größer sein sollte (z.B. um beim Rangieren des Fahrzeugs das Lenkrad ohne großen Kraftaufwand betätigen zu können), soll die Momentenunterstützung bei höheren Geschwindigkeiten (z.B. um die Fahrstabilität bei einer Autobahnfahrt zu erhöhen) gesenkt werden.

Vorteilhaft ist, wenn die Durchflussmenge für die elektronisch steuerbare Hydraulikpumpe bei einer Erhöhung der Drehgeschwindigkeit des Ritzelwinkels ebenfalls, insbesondere proportional erhöht wird.

Das erfindungsgemäße Lenksystem ermöglicht eine sichere und ruhige Lenkung des Kraftfahrzeugs. Das Lenkgefühl beim Fahren wird verbessert. Durch den Eingriff der Überlagerungsmittel verursachte, eventuell sich störend auf die Lenkhandhabe auswirkende, Reaktionsmomente werden in einfacher und vorteilhafter Weise deutlich verringert. Eine proportionale Erhöhung wird zwar angestrebt, ist jedoch nicht in allen Bereichen möglich bzw. sinnvoll, da etwa bei einer niedrigen Fahrzeuggeschwindigkeit und sehr hoher Drehgeschwindigkeit des Ritzelwinkels wesentlich schneller reagiert werden und dementsprechend ein höherer Gradient verwendet werden muss. Des weiteren muss dabei die maximale Stelldynamik der Hydraulikpumpe beachtet werden, unter Umständen sollte somit ein gewisser Vorhalt vorgesehen werden. Diese Abhängigkeiten können z.B. in einem entsprechenden Kennfeld abgelegt werden.

Die Durchflussmenge für die elektronisch steuerbare Hydraulikpumpe wird durch eine hydraulische Nutzfunktion des auf dem Steuergerät ablaufenden Verfahrens zum Betrieb des Lenksystems ermittelt.

Vorteilhaft ist, wenn die hydraulische Nutzfunktion wenigstens zwei Teilfunktionen aufweist, wobei
- die erste Teilfunktion geeignete Maßnahmen einleitet, wenn die Eingangsgrößen des Steuergeräts fehlerhaft sind; und
- die zweite Teilfunktion das Steuersignal zur Steuerung der Durchflussmenge für die elektronisch steuerbare Hydraulikpumpe ermittelt.

Dadurch werden entsprechende Maßnahmen getroffen, wenn Eingangssignale des Steuergeräts, insbesondere die Drehgeschwindigkeit des Ritzelwinkels oder die Fahrzeuggeschwindigkeit, fehlerhaft sind.

Das Verfahren zum Betrieb des erfindungsgemäßen Lenksystems ist vorteilhafterweise als Computerprogramm auf dem Steuergerät des Lenksystems realisiert. Dazu ist das Computerprogramm in einem Speicherelement des Steuergeräts gespeichert. Durch die Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick, oder dergleichen) oder einem Internet-Server als Computerprogrammprodukt gespeichert sein und von dort aus in das Speicherelement des Steuergeräts übertragen werden.

Vorteilhafte Weiterbildungen und Ausgestaltungen der Erfindung ergeben sich aus den weiteren Unteransprüchen. Nachfolgend ist anhand der Zeichnung ein Ausführungsbeispiel der Erfindung prinzipmäßig dargestellt.

Es zeigt:
- Fig. 1: ein Schema eines erfindungsgemäßen Lenksystems; und
- Fig. 2: ein Schema einer hydraulischen Nutzfunktion welche auf einem Steuergerät des Lenksystems nach Fig. 1 ablauffähig ist.

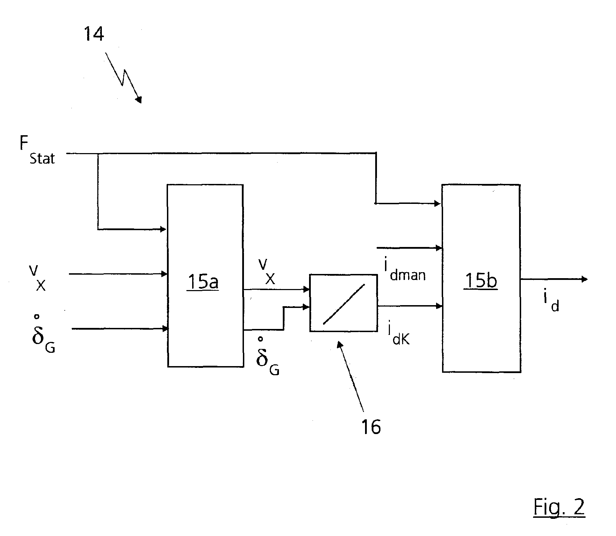

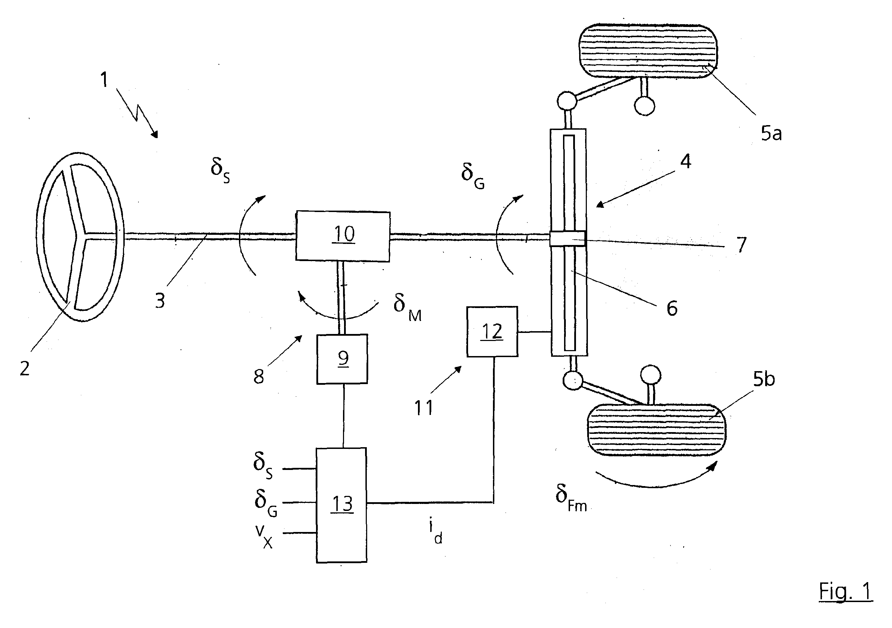

In Fig. 1 ist ein erfindungsgemäßes Lenksystem 1 eines Kraftfahrzeugs dargestellt. Das Lenksystem 1 weist eine als Lenkrad ausgebildete Lenkhandhabe 2 auf. Das Lenkrad 2 ist über eine Gelenkwelle 3 mit einem Lenkgetriebe 4 verbunden. Das Lenkgetriebe 4 dient dazu, einen Drehwinkel der Gelenkwelle 3 in einen Lenkwinkel δ_{Fm} von lenkbaren Rädern 5a, 5b des Kraftfahrzeugs umzusetzen. Das Lenkgetriebe 4 weist eine Zahnstange 6 und ein Ritzel 7 auf, an welches die Gelenkwelle 3 angreift. Das Lenksystem 1 umfasst darüber hinaus Überlagerungsmittel 8, die einen als Elektromotor ausgebildeten Stellantrieb 9 und ein von diesem angetriebenes Überlagerungsgetriebe 10 aufweisen. Das Überlagerungsgetriebe ist als Planetengetriebe 10 ausgebildet. Durch das Lenkrad 2 wird dann ein Lenkradwinkel δ_{S} als Maß für einen gewünschten Lenkwinkel δ_{Fm} der lenkbaren Räder 5a, 5b des Kraftfahrzeugs vorgegeben. Mit Hilfe des Elektromotors 9 wird ein Zusatzwinkel δ_{M} generiert und durch das Überlagerungsgetriebe 10 mit dem Lenkradwinkel δ_{S} überlagert. Der Zusatzwinkel bzw. Motorwinkel δ_{M} wird zur Verbesserung der Fahrdynamik des Kraftfahrzeugs bzw. des Komforts erzeugt. Die Summe aus Lenkradwinkel δ_{S} und Zusatzwinkel δ_{M} ergibt den Ritzelwinkel δ_{G}.

Den Überlagerungsmitteln 8 nachgeordnet weist das Lenksystem 1 einen Servoantrieb 11 auf, der insbesondere der variablen Momentenunterstützung dient und auch als elektrohydraulischer Wandler bezeichnet wird. Der Servoantrieb 11 umfasst eine elektronisch steuerbare Hydraulikpumpe 12, welche eine Hydraulikflüssigkeit über ein Hydraulikventil (nicht näher dargestellt) in das Lenkgetriebe 4 transportiert. Über das Hydraulikventil wird der Fluss der Hydraulikflüssigkeit an das eine oder das andere Ende der Zahnstange 6 gelenkt, um so eine entsprechende Momentenunterstützung in die gewünschte Richtung zu bewirken. Über die Durchflussmenge bzw. den Druck der in das Lenkgetriebe 4 (d.h. einem Gehäuse des Lenkgetriebes 4) gelenkten Hydraulikflüssigkeit kann die Stärke der Momentenunterstützung variiert werden. Dies erfolgt gemäß der Erfindung durch die elektronisch steuerbare Hydraulikpumpe 12.

Um thermische Belastungen zu minimieren und einen erhöhten Kraftstoffverbrauch zu verhindern, arbeitet der Servoantrieb 11 des erfindungsgemäßen Lenksystems 1 mittels der elektronisch steuerbaren Hydraulikpumpe 12, welche beispielsweise aus der DE 102 05 859 A1 bekannt ist. Durch die Hydraulikpumpe 12 kann die Energiebilanz innerhalb des Lenksystems 1 gegenüber einer Hydraulikpumpe mit konstant hohem Durchfluss deutlich verbessert werden.

Des weiteren weist das Lenksystem 1 ein Steuergerät 13 auf, welches unter anderem zur Ansteuerung des Elektromotors 9 und der elektronisch steuerbaren Hydraulikpumpe 12 dient. Auf dem elektronischen Steuergerät 13 läuft ein Verfahren zum Betrieb des Lenksystems 1 ab. Dadurch wird unter anderem der Elektromotor 9 mit einem elektrischen Ansteuersignal δ_{Md} und die Hydraulikpumpe 12 mit einem elektrischen Ansteuersignal i_{d} angesteuert. Diese Ansteuerung erfolgt unter anderem in Abhängigkeit von der Fahrzeuggeschwindigkeit v_{X} des Kraftfahrzeugs. Demzufolge ist es möglich, bei niedrigen Fahrzeuggeschwindigkeiten v_{X} eine hohe Momentenunterstützung zu wählen, um das Rangieren des Fahrzeugs zu erleichtern und bei hohen Geschwindigkeiten v_{X} eine niedrige Momentenunterstützung vorzugeben (stabilere Lenkung). Analog erfolgt die Ansteuerung des Elektromotors 9 in Abhängigkeit von der Fahrzeuggeschwindigkeit v_{X} des Kraftfahrzeugs, d.h. das Übersetzungsverhältnis zwischen dem Lenkradwinkel δ_{S} und dem Ritzelwinkel δ_{G} bzw. dem Lenkwinkel δ_{Fm} der Räder 5a, 5b wird durch die Überlagerung des Lenkwinkels δ_{S} mit verschiedenen, fahrzeuggeschwindigkeitsabhängigen Zusatzwinkeln δ_{M} eingestellt. Dadurch ist es möglich, bei niedrigen Fahrzeuggeschwindigkeiten v_{X} ein relativ kleines Übersetzungsverhältnis vorzugeben, d.h. eine relativ geringe Drehung des Lenkrads 2 führt zu einem relativ großen Lenkwinkel δ_{Fm} der Räder 5a, 5b. Ebenso ist es bei einer hohen Fahrzeuggeschwindigkeit v_{X} aus Stabilitätsgründen denkbar, ein relativ großes Übersetzungsverhältnis vorzugeben. Diese Abhängigkeit der Steuerung von der Fahrzeuggeschwindigkeit v_{X} ist jedoch nicht zwingend erforderlich.

Damit die vorstehend angeführten Steuerungsfunktionen ausgeführt werden können, erhält das Steuergerät 13 als Eingangssignal die aktuelle Fahrzeuggeschwindigkeit v_{X}.

Außerdem weist das Lenksystem 1 Sensoren (nicht dargestellt) auf, welche den Lenkradwinkel δ_{S}, den Zusatzwinkel δ_{M} und den Ritzelwinkel δ_{G} oder sogar bereits deren Drehgeschwindigkeit messen. Über diese Sensoren wird das Steuergerät 13 mit den Winkelgrößen δ_{S}, δ_{M} und δ_{G} oder bereits mit deren Drehgeschwindigkeiten δ̇*G*, als Eingangssignale beliefert. Des weiteren könnten diese Größen auch von anderen Fahrzeugsystemen geliefert werden (über einen CAN-Bus) oder anhand weiterer Eingangsgrößen (z.B. Raddrehzahlen, etc.) von dem Steuergerät 13 mittels eines geeigneten Modells des Lenksystems berechnet werden. Dadurch wird eine Steuerung, insbesondere der Durchflussmenge der Hydraulikpumpe 12, auch in Abhängigkeit dieser Größen ermöglicht. Wie aus Fig. 1 ersichtlich erhält das Steuergerät 13 wenigstens den Lenkradwinkel δ_{S}, den Ritzelwinkel δ_{G} und die aktuelle Fahrzeuggeschwindigkeit v_{X} als Eingangssignale.

Die Drehgeschwindigkeit des Ritzelwinkels δ̇_{*G*} stellt eine Kennzahl für die Aktivität des Lenksystems 1 dar und enthält die Wirkungen des überlagerten Zusatzwinkels δ_{M} der Überlagerungsmittel 8. Es ist erfindungsgemäß vorgesehen, die Durchflussmenge für die elektronisch steuerbare Hydraulikpumpe 12 in Abhängigkeit der Drehgeschwindigkeit des Ritzelwinkels δ̇_{*G*} zu steuern. Besonders vorteilhaft ist, wenn die Durchflussmenge für die Hydraulikpumpe 12 bei einer Erhöhung der Drehgeschwindigkeit des Ritzelwinkels δ̇_{*G*} ebenfalls, insbesondere proportional, erhöht wird.

Das erfindungsgemäße Lenksystem 1 ermöglicht somit eine sichere und ruhige Lenkung des Kraftfahrzeugs. Das Lenkgefühl beim Fahren wird verbessert. Durch den Eingriff der Überlagerungsmittel 8 verursachte, eventuell sich störend auf das Lenkrad 2 auswirkende, Reaktionsmomente werden in einfacher und vorteilhafter Weise minimiert. Eine proportionale Erhöhung der Durchflussmenge zur Drehgeschwindigkeit des Ritzelwinkels δ̇_{*G*} wird zwar angestrebt, ist jedoch nicht in allen Bereichen möglich bzw. sinnvoll, da etwa bei einer niedrigen Fahrzeuggeschwindigkeit v_{X} und sehr hoher Drehgeschwindigkeit des Ritzelwinkels δ̇_{*G*} wesentlich schneller reagiert werden und dementsprechend ein höherer Gradient verwendet werden muss. Des weiteren muss die maximale Stelldynamik der Hydraulikpumpe 12 beachtet werden, unter Umständen sollte ein gewisser Vorhalt vorgesehen werden. Diese Abhängigkeiten sind in einem Kennfeld 16 (siehe Fig. 2) abgelegt.

Wie aus Fig. 2 ersichtlich, betreibt hierzu eine hydraulische Nutzfunktion 14 des Verfahrens zum Betrieb des Lenksystems 1 den Durchfluss der Hydraulikpumpe 12 in Abhängigkeit der Fahrzeuggeschwindigkeit v_{X} und der Drehgeschwindigkeit des Ritzelwinkels δ̇_{*G*}. Dadurch wird eine geeignete Stelldynamik und eine momentenverträgliche Winkelüberlagerung erreicht. Dies erfolgt in einer bevorzugten Ausführungsform der Erfindung durch zwei Teilfunktionen 15a, 15b. Die erste Teilfunktion 15a erhält als Eingangssignale den geforderten Funktionsstatus F_{Stat} von einer übergeordneten Fahrdynamikregelung bzw. von einer Fehlerstrategie des Lenksystems 1 (nicht dargestellt), die Fahrzeuggeschwindigkeit vₓ in km/h und die Ritzelwinkelgeschwindigkeit δ̇_{*G*} in °/s. Die Teilfunktion 15a dient zur Vorverarbeitung der an den Funktionseingängen anliegenden Signale v_{X} und δ̇_{*G*}. Die Signale werden hier gefiltert und geeignete Maßnahmen bei deren Ausfall getroffen. Der Funktionsstatus F_{Stat} kann entsprechend die Werte "reset", "off", "normal", "konstanter Steuerstrom", "v_{X} fehlerhaft", "δ̇_{*G*} fehlerhaft" und "v_{X} & δ̇_{*G*} fehlerhaft" annehmen.

Bei einem fehlerhaften Fahrzeuggeschwindigkeitssignal v_{X} wird die Funktion 14 in eine sichere Rückfallebene mit einem konstanten Wert für v_{X} geschaltet, analog geschieht dies bei einer fehlerhaften Ritzelwinkelgeschwindigkeit δ̇_{*G*}.

Mit den aufbereiteten bzw. konstant begrenzten Signalen v_{X} und δ̇_{*G*} wird nun mittels des Kennfelds 16 ein zugehöriger Sollstromwert i_{dK} für die Hydraulikpumpe 12 (Wertebereich 0...1000 mA) ermittelt. Dieser dient als Eingangssignal für die Teilfunktion 15b, welche zusätzlich dazu auch einen manuell vorgebbaren Konstantwert i_{dman} (auswählbar durch Vorgabe "konstanter Steuerstrom" des Funktionsstatus F_{Stat}) erhalten kann und aufgrund des vorgegeben Funktionsstatus F_{Stat} schließlich das Ansteuersignal i_{d} für die Hydraulikpumpe 12 ermittelt und ausgibt.

Das Verfahren zum Betrieb des erfindungsgemäßen Lenksystems 1 ist vorteilhafterweise als Computerprogramm auf dem Steuergerät 13 realisiert. Dazu ist das Computerprogramm in einem Speicherelement des Steuergeräts 13 gespeichert (nicht dargestellt). Durch die Abarbeitung auf einem Mikroprozessor des Steuergeräts 13 wird das Verfahren laufend zu jedem Abtastschritt ausgeführt. Das Computerprogramm kann auf einem computerlesbaren Datenträger (Diskette, CD, DVD, Festplatte, USB-Memorystick, oder dergleichen) oder einem Internet-Server als Computerprogrammprodukt gespeichert sein und von dort aus in das Speicherelement des Steuergeräts 13 übertragen werden.

## Patentansprüche

1. Servounterstütztes Lenksystem (1) eines Kraftfahrzeugs, mit
1.1. einer Lenkhandhabe (2) zur Vorgabe eines Lenkradwinkels (δ_{S}) als Maß für einen gewünschten Lenkwinkel (δ_{Fm}) für wenigstens ein lenkbares Rad (5a,5b) des Kraftfahrzeugs;
1.2. einem Lenkgetriebe (4) mit einem Ritzel (7), welches einen von dem Lenkradwinkel (δ_{S}) abhängigen Ritzelwinkel (δ_{G}) in den Lenkwinkel (δ_{Fm}) des wenigstens einen lenkbare Rades (5a,5b) des Kraftfahrzeugs umsetzt;
1.3. Überlagerungsmitteln (8) zur Erzeugung eines Zusatzwinkels (δ_{M}) und zur Erzeugung des Ritzelwinkels (δ_{G}) aus einer Überlagerung des Lenkradwinkels (δ_{S}) mit dem Zusatzwinkel (δ_{M}); und
1.4. einem Servoantrieb (11) mit einer elektronisch steuerbaren Hydraulikpumpe (12) zur Realisierung einer variablen Momentenunterstützung, wobei
1.5. eine Durchflussmenge für die elektronisch steuerbare Hydraulikpumpe (12) in Abhängigkeit einer Drehgeschwindigkeit des Ritzelwinkels ( 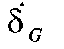 ) ermittelt und durch ein Steuersignal (i_{d}) eines Steuergeräts (13) des Lenksystems (1) gesteuert wird.

2. Lenksystem nach Anspruch 1,
**dadurch gekennzeichnet , dass**
eine Durchflussmenge für die elektronisch steuerbare Hydraulikpumpe (12) zusätzlich in Abhängigkeit der Fahrzeuggeschwindigkeit (v_{X}) ermittelt und durch ein Steuersignal (i_{d}) des Steuergeräts (13) des Lenksystems gesteuert wird.

3. Lenksystem nach Anspruch 1 oder 2,
**dadurch gekennzeichnet , dass**
die Überlagerungsmittel (8) zur Erzeugung des Zusatzwinkels (δ_{M}) einen Stellantrieb, insbesondere Elektromotor (9) und zur Erzeugung des Ritzelwinkels (δ_{G}) aus einer Überlagerung des Lenkradwinkels (δ_{S}) und des Zusatzwinkels (δ_{M}) ein Überlagerungsgetriebe (10) aufweisen.

4. Lenksystem nach Anspruch 1, 2 oder 3,
**dadurch gekennzeichnet , dass**
der Stellantrieb (9) zur Erzeugung des Zusatzwinkels (δ_{M}) durch ein Steuersignal (δ_{Md}) des Steuergeräts (13) des Lenksystems (1) angesteuert wird.

5. Lenksystem nach einem der Ansprüche 1 bis 4,
**dadurch gekennzeichnet , dass**
die Durchflussmenge für die elektronisch steuerbare Hydraulikpumpe (12) bei einer Erhöhung der Drehgeschwindigkeit des Ritzelwinkels ( 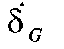 ) ebenfalls, insbesondere proportional erhöht wird.

6. Lenksystem nach einem der Ansprüche 1 bis 5,
**dadurch gekennzeichnet , dass**
das Steuergerät die Drehgeschwindigkeit des Ritzelwinkels ( 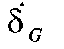 ) und die Fahrzeuggeschwindigkeit (v_{X}) als Eingangsgrößen, insbesondere von Sensoren oder weiteren Fahrzeugsystemen erhält oder anhand weiterer Eingangsgrößen mittels eines geeigneten Modells, insbesondere des Lenksystems (1) berechnet.

7. Verfahren zum Betrieb eines Lenksystems (1), welches auf dem Steuergerät (13) des Lenksystems (1) gemäß einem der Ansprüche 1 bis 6 abläuft,
**dadurch gekennzeichnet , dass**
die Durchflussmenge für die elektronisch steuerbare Hydraulikpumpe (12) durch eine hydraulische Nutzfunktion (14) des Steuergeräts (13) ermittelt wird.

8. Verfahren nach Anspruch 7,
**dadurch gekennzeichnet , dass**
die hydraulische Nutzfunktion (14) wenigstens zwei Teilfunktionen (15a,15b) aufweist, wobei
- die erste Teilfunktion (15a) geeignete Maßnahmen einleitet, wenn die Eingangsgrößen (v_{X}, 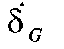 ) des Steuergeräts (13) fehlerhaft sind; und
- die zweite Teilfunktion (15b) das Steuersignal (i_{d}) zur Steuerung der Durchflussmenge für die elektronisch steuerbare Hydraulikpumpe (12) ermittelt.

9. Computerprogramm mit Programmcodemitteln, um ein Verfahren zum Betrieb eines servounterstützten Lenksystems (1) gemäß einem der Ansprüche 7 oder 8 durchzuführen, wenn dass Programm auf einem Mikroprozessor eines Computers, insbesondere auf dem Steuergerät (13) des Lenksystems (1), ausgeführt wird.

10. Computerprogrammprodukt mit Programmcodemitteln, die auf einem computerlesbaren Datenträger gespeichert sind, um ein Verfahren zum Betrieb eines servounterstützten Lenksystems (1) gemäß einem der Ansprüche 7 oder 8 durchzuführen, wenn dass Programm auf einem Mikroprozessor eines Computers, insbesondere auf dem Steuergerät (13) des Lenksystems (1), ausgeführt wird.

11. Steuergerät (13) für ein Lenksystem (1) eingerichtet zur Ausführung eines Computerprogramms gemäß Anspruch 9.
